# EUROPÄISCHE PATENTSCHRIFT

(11) **EP 0 896 749 B1**
(45) Veröffentlichungstag und Bekanntmachung des Hinweises auf die Patenterteilung: **22.01.2003**
(21) Anmeldenummer: 98909354.7
(22) Anmeldetag: 06.02.1998
(51) Int. Cl.: H01Q 19/06

(54) **MIKROWELLEN-ANTENNENANORDNUNG FÜR EIN KRAFTFAHRZEUG-RADARSYSTEM**
MICROWAVE ANTENNA ARRAY FOR A MOTOR VEHICLE RADAR SYSTEM
ENSEMBLE ANTENNE HYPERFREQUENCE POUR SYSTEME RADAR DE VEHICULE A MOTEUR

(30) Priorität: 06.02.1997 DE 19704399; 15.12.1997 DE 19755607
(43) Veröffentlichungstag der Anmeldung: 17.02.1999
(73) Patentinhaber: ROBERT BOSCH GMBH, 70442 Stuttgart (DE)
(72) Erfinder: SCHMIDT, Ewald, D-71634 Ludwigsburg (DE); VOIGTLÄNDER, Klaus, D-73117 Wangen (DE); ZEIHER, Jürgen, D-70499 Stuttgart (DE); LUCAS, Bernhard, D-74395 Mundelsheim (DE); BEEZ, Thomas, D-74189 Weinsberg (DE); LANGENHAN, Dirk, D-71701 Schwieberdingen (DE); OLBRICH, Herbert, D-71277 Rutesheim (DE); SCHNEEMANN, Jörg, D-71554 Weissach (DE)
(86) Internationale Anmeldenummer: DE9800343
(87) Internationale Veröffentlichungsnummer: WO98035403

(56) Entgegenhaltungen:
- EP-A- 0 217 426
- EP-A- 0 498 524
- DE-A- 19 530 065
- GB-A- 2 252 452
- US-A- 5 264 859

## Beschreibung

### Stand der Technik

Die vorliegende Erfindung betrifft eine Mikrowellen-Antennenanordnung für ein Kraftfahrzeug-Radarsystem.

Aus zahlreichen Schriften ist mittlerweile bekannt, ein Kraftfahrzeug mit einem Radarsystem auszurüsten, welches beispielsweise zur Detektion von Hindernissen oder vorausfahrenden Fahrzeugen genutzt wird. Ein solches Radarsystem muß dabei an die besonderen Einbauumgebungen eines Kraftfahrzeugs angepaßt sein. Neben einer entsprechenden Resistenz gegenüber Temperaturschwankungen, Verschmutzungen oder Beschleunigungen spielt dabei auch die Baugröße des Radarsystems eine Rolle.

Aus der EP 498 524 A2 ist ein Kraftfahrzeug-Radarsystem bekannt mit zwei getrennten Mikrowellen-Antennenanordnungen für den Sende- und für den Empfangsweg. Beide Mikrowellen-Antennenanordnungen bestehen aus einem oder mehreren aktiven Speiseelementen sowie je einer dielektrischen Linse zur Fokussierung der Radarstrahlen. Die gesamte Anordnung ist in einem zweigeteilten Gehäuse untergebracht, welches in Strahlrichtung des Radarsystems jeweils durch die beiden dielektrischen Linsen abgeschlossen ist.

In der DE 44 12 770 A1 ist ein Kraftfahrzeug-Abstandswarnradar angegeben, das nur eine Mikrowellen-Linsenantennenanordnung sowohl für den Sende- als auch für den Empfangsweg benötigt. Auch in diesem Fall ist das Radarsystem in einem Gehäuse untergebracht, das in Strahlrichtung durch die dielektrische Linse der Mikrowellen-Antennenanordnung abgeschlossen wird. Zur Erreichung einer geringen Bautiefe wird eine Linse mit kurzer Brennweite eingesetzt, die zur Verringerung der Linsendicke zudem als Stufenlinse ausgeführt ist.

In der US 5,455,589 ist ein kompaktes Mikro- und Millimeterwellenradar beschrieben, das ebenfalls für einen Einsatz in Kraftfahrzeugen vorgesehen ist. Bei diesem Radar wird, um eine geringe Baugröße zu erreichen, eine Antennenanordnung verwendet, bei der der Strahlengang der elektromagnetischen Wellen optisch "gefaltet" ist. Dazu ist eine Antennenanordnung, bestehend aus einer fokussierenden Linse und einem Speiseelement, mit zwei reflektierenden Schichten versehen. Eine erste, als Transreflektor bezeichnete Schicht, ist vor oder hinter der Antennenlinse angeordnet. Sie läßt elektromagnetische Wellen einer bestimmten Polarisationsrichtung durch, während sie elektromagnetische Wellen der dazu senkrecht stehenden Polarisationsrichtung reflektiert. Eine zweite, als Twistreflektor bezeichnete Schicht ist um das Speiseelement angeordnet. Sie reflektiert auftreffende elektromagnetische Wellen, wobei sie die Wellen in ihrer Polarisationsrichtung um 90° dreht. Durch diese Anordnung werden Radarstrahlen sowohl beim Senden als auch beim Empfangen mehrfach zwischen den beiden genannten Schichten reflektiert. Aus diesem Grund kann der Abstand zwischen den Speiseelementen und der Antennenlinse auf eine Größe verkürzt werden, die kleiner ist als die Brennweite der Antennenlinse allein.

Wenn sich insbesondere auch die US 5,455,589 und die DE 44 12 770 dem Problem widmen, ein kompaktes Kraftfahrzeug-Radarsystem vorzuschlagen, vermeidet jedoch keine der genannten Lösungen den Nachteil, daß der Bereich zwischen den Speiseelementen und der Antennenlinse leer und damit weitgehend ungenutzt verbleibt. Die Größe dieses Bereichs wird durch die notwendige Brennweite der verwendeten Antennenlinse bestimmt. Bei allen beschriebenen Lösungen nimmt dieser Raum einen Großteil des insgesamt von dem Radarsystem benötigten Raumes ein.

Aus der DE 195 11 982 A1 ist eine Anordnung für ein bildgebendes Radar mit einem Sender und einem Empfänger bekannt. In einem Ausführungsbeispiel ist dargestellt, daß Wellen aus einem Hohlleiter über eine Kollimatorlinse durch ein Antennenarray hindurch auf eine zweite Linse abgebildet werden. Das Antennenarray erhält somit die zu sendenden und die zu empfangenen Wellen und ist zwischen dem Hohleiter und der zweiten Linse angeordnet. Ziel dieser Anordnung ist jedoch nicht die Erreichung einer geringen Baugröße, sondern eine Anordnung, bei der ein lokaler Empfangsoszillator eingespart werden kann. Ganz wesentlich ist bei dieser Anordnung, daß das Antennenarray und auch gegebenenfalls auf ihm angeordnete Bauelemente zur Verarbeitung der zu sendenden und/oder zu empfangenen Signale vorgesehen sind. Eine Verkleinerung der Baugröße des Radars ist hierdurch nicht gegeben.

### Aufgabe, Lösung und Vorteile der Erfindung

Aufgabe der vorliegenden Erfindung ist es, eine Mikrowellen-Antennenanordnung anzugeben, mit der die Baugröße eines Sende- und/oder Empfangsystems, welches die Antennenanordnung beinhaltet, ergänzend oder alternativ zu bekannten Konstruktionen verkleinerbar ist. Diese Aufgabe wird durch eine Mikrowellen-Antennenanordnung gemäß dem Hauptanspruch gelöst, dem als Grundgedanke die Lehre zugrunde liegt, Bauelementträger, die im Rahmen der Antennenanordnung selbst keine Funktion haben, trotzdem in einem Raumbereich zwischen dem Speiselement und dem fokussierenden Mittel anzuordnen. Vorteilhafte Ausgestaltungen der Erfindung ergeben sich aus den untergeordneten Ansprüchen.

Vorteil der erfindungsgemäßen Mikrowellen-Antennenanordnung ist, daß der zur Verfügung stehende Raum innerhalb eines Gehäuses, in das das Sende- und/oder Empfangsystems eingebaut ist, optimal ausgenutzt werden kann. Dementsprechend kann das Gehäuse durch die erfindungsgemäß verlagerte räumliche Anordnung von weiteren benötigten Baugruppen, wie zum Beispiel Signalverarbeitungs- oder Stromversorgungsschaltungen, bis auf die unmittelbar benötigte Größe reduziert werden. Besonders vorteilhaft ist es, wenn der erfindungsgemäß angeordnete Bauelementeträger und die auf ihm angeordneten Bauelemente zur Verarbeitung von Signalen vorgesehen sind, die in einem Frequenzbereich liegen, der niedriger ist als der Frequenzbereich der elektromagnetischen Wellen. Dies gewährleistet eine gute Entkopplung. Gegebenenfalls können die Bauelemente auf dem erfindungsgemäß angeordneten Bauelementeträger mit Abschirmblechen abgeschirmt sein. Im gleichen Sinne vorteilhaft ist es, wenn die Bauelemente zur Verarbeitung von digitalen Signalen vorgesehen sind oder Bestandteil einer Stromversorgungsschaltung sind.

Wird entsprechend einer vorteilhaften Ausgestaltung der Erfindung als weiteres fokussierendes Mittel eine Sublinse verwendet, kann die Brennweite der Antennenanordnung und damit die Baugröße des Sende- und/oder Empfangsystems noch weiter verringert werden. Darüber hinaus besitzt eine solche Vorfokussierung den Vorteil, daß die Mikrowellen exakter auf die eigentliche (Haupt-)Antennenlinse fokussiert werden. Dadurch wird ein Überstrahlen dieser Antennenlinse (spillover loss) vermindert. Vorteilhafterweise ist die Sublinse an dem Bauelementträger befestigt, wodurch die Montage wesentlich einfacher und weniger toleranzempfindlich ist als bei bekannte Anordnungen zur Verringerung oder Verhinderung einer Überstrahlung, wie beispielsweise bei sogenannten Stielstrahlern oder Polyrods. Alternativ kann als vorfokussierendes Mittel auch ein dielektrischer Körper verwendet werden, dessen Abmessungen so gewählt sind, daß er für die verwendeten Wellen als Superstrate wirkt. Wie diese Abmessungen gewählt werden müssen, ist beispielsweise in "Fundamental Superstrate (Cover) Effects on Printed Circuit Antennas" von Alexopoulos et. al. in IEEE Transactions on Antennas and Propagation, vol. AP-32, no. 8, Seite 807-816 beschrieben.

### Beschreibung von Ausführungsbeispielen

Nachfolgend werden Ausführungsbeispiele der Erfindung anhand einer Zeichnung erläutert. Es zeigen
Figur 1a einen Querschnitt eines Kraftfahrzeug-Radarsystems mit einer erfindungsgemäßen Mikrowellen-Antennenanordnung,
Figur 1b eine Draufsicht des erfindungsgemäßen Radarsystems entsprechend Figur 1a und
Figur 2 den Querschnitt eines zweiten Ausführungsbeispiels eines Kraftfahrzeug-Radarsystems mit einer erfindungsgemäßen Antennenanordnung.

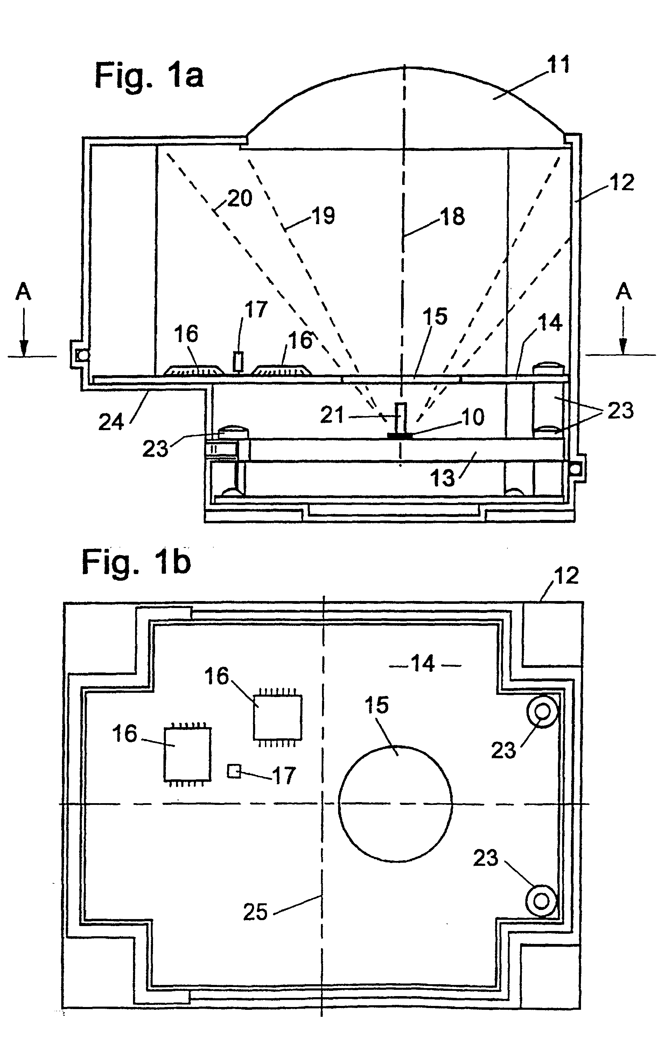

Figur 1a zeigt ein erfindungsgemäßes Kraftfahrzeug-Radarsystem mit einer entsprechenden Mikrowellen-Antennenanordnung im Querschnitt. Die Antennenanordnung, bestehend aus mindestens einem Speiseelement 10 und einer Antennenlinse 11, ist in einem Gehäuse 12 untergebracht. Dabei ist die Antennenlinse 11 Bestandteil des Gehäuses 12, d.h. sie bildet gleichsam ein Fenster für die gesendete oder empfangene Mikrowellenstrahlung. Das mindestens eine Speiseelement 10 befindet sich auf einem ersten Bauelementeträger 13, der beispielsweise eine Microstrip-Schaltungsanordnung umfaßt. Das mindestens eine Speiseelement 10 ist dabei vorzugsweise ein hinreichend bekanntes Patchelement. Alternativ kann sich hier anstelle dieses ersten Bauelementeträgers 13 und eines oder mehrerer Patchelemente 10 beispielsweise auch eine Hohlleiteranordnung befinden. Zwischen dem mindestens einen Speiseelement 10 und der Antennenlinse 11 ist ein weiterer Bauelementeträger 14 angeordnet. Dieser weist eine Aussparung 15 auf, durch die die von dem Speiseelement 10 gesendete oder empfangene Mikrowellenstrahlung hindurchtreten kann. Zwei gestrichelte, V-förmige Linien 19 und 20 kennzeichnen beispielhaft Strahlengänge der Mikrowellen. Desweiteren sind auf dem Bauelementeträger 14 einzelne Bauelemente 16 und 17 skizziert. Diese Bauelemente sind zur Verarbeitung von anderen Signalen vorgesehen als den Signalen, die von dem mindestens einen Speiselement 10 aufgenommen oder abgegeben werden. Der Bauelementeträger 14 beinhaltet vorzugsweise Signalverarbeitungs- und Signalauswerteschaltungen, die im Zwischenfrequenzbereich oder Basisband die Auswertung der empfangenen Signale durchführen. Als weiteres Beispiel seien Strom- oder Spannungsversorgungsschaltungen für das Radarsystem genannt.

Die Bauelementeträger 13 und 14 sind in diesem Ausführungsbeispiel auf Stempeln 23 bzw. auf einem Gehäusevorsprung 24 montiert. Dies schließt jedoch andere Montagemöglichkeite nicht aus. Außerdem ist ebenfalls beispielhaft ein Stielstrahler (Polyrod) 21 oberhalb von dem Speiseelement 10 skizziert. Eine Linie 18 kennzeichnet die Hauptstrahlrichtung der Antennenanordnung.

Figur 1b zeigt die Draufsicht des zuvor beschriebenen Kraftfahrzeug-Radarsystems gemäß der Ansichtslinie A-A. Zu sehen ist der weiter oben liegende Bauelementeträger 14 innerhalb des Gehäuses 12. Der Bauelementeträger 14 weist die bereits genannte Aussparung 15 auf, die vorzugsweise kreisförmig gestaltet ist und durch die gesendete oder empfangene elektromagnetischen Wellen hindurchtreten können. Weiterhin skizziert sind die beispielhaft angenommenen Bauelemente 16 und 17 sowie die Stempel 23, auf denen der Bauelementeträger 14 montiert ist. Eine Linie 25 gibt eine Symmetrie- oder Mittellinie des Bauelementeträgers 14 an.

Das so beschriebene Kraftfahrzeug-Radarsystem mit der erfindungsgemäßen Mikrowellen-Antennenanordnung arbeitet nach allgemein bekannten Radarverfahren, beispielsweise als FMCW-Radar oder auch als Pulsradar. Darüber hinaus kann eine solche Mikrowellen-Antennenanordnung natürlich auch bei sämtlichen anderen Mikrowellenanwendungen, beispielsweise Richtfunk, verwendet werden.

Ein bekanntes Problem bei gattungsgemäßen Antennenanordnungen mit mindestens einem Speiseelement und einem fokussierenden Mittel ist, daß aufgrund einer üblicherweise geringen eigenen Richtwirkung der Speiseelemente ein Anteil abgegebener Mikrowellenstrahlung an dem fokussierenden Mittel vorbeigeht. Dies wiederum hat zwei nachteilige Wirkungen zur Folge. Zum einen wird dieser Anteil dann natürlich nicht von dem fokussierenden Mittel bzw. der Antennenlinse 11 in der gewünschten Richtung fokussiert, was die Leistungsbilanz der Antennenanordnung insgesamt verschlechtert. Zum anderen wird dieser, die Antennenlinse 11 überstrahlende Anteil von den Innenwänden des Gehäuses 12 reflektiert. Dies hat zur Folge, daß sich innerhalb des Gehäuses 12 unerwünschterweise Mikrowellenstrahlung ausbreitet, die möglicherweise störend auf die Bauelemente 16 oder 17 einwirkt. Zur Unterdrückung dieser Reflexionen ist beispielsweise aus der genannten DE 44 12 770 A1 bekannt, die Innenwände des Gehäuses 12 mit einem absorbierenden Material zu versehen. Auf diese Weise kann zumindest die störende Wirkung der die Antennenlinse 11 überstrahlenden Mikrowellen verringert werden. Um darüber hinaus jedoch auch die Leistungsbilanz der Antennenanordnung zu verbessern, ist bekannt, die Speiseelemente 10 mit sogenannten Stielstrahlern (Polyrods) 21 zu versehen, d.h. solche Stielstrahler vor den Speiseelementen 10 anzuordnen. Ein Strahlengang gesendeter Mikrowellen ohne Verwendung von Polyrods 21 ist in Figur 1a mit der V-förmigen Linie 20, ein Strahlengang mit Verwendung von Polyrods 21 ist mit der V-förmigen Linie 19 skizziert. Problematisch ist dabei jedoch eine exakte Montage der Polyrods 21, insbesondere wenn als Speiseelemente 10 sogenannte Patchantennen verwendet werden. Bereits eine geringe Schiefstellung der nur wenige Millimeter großen Polyrods 21 führt wiederum zu einer Überstrahlung der Antennenlinse 11. Auch müssen solche Polyrods 21 nur einige Mikrometer oberhalb von solchen Patchelementen positioniert werden, was ebenfalls, insbesondere bei einer Großserienfertigung problematisch ist.

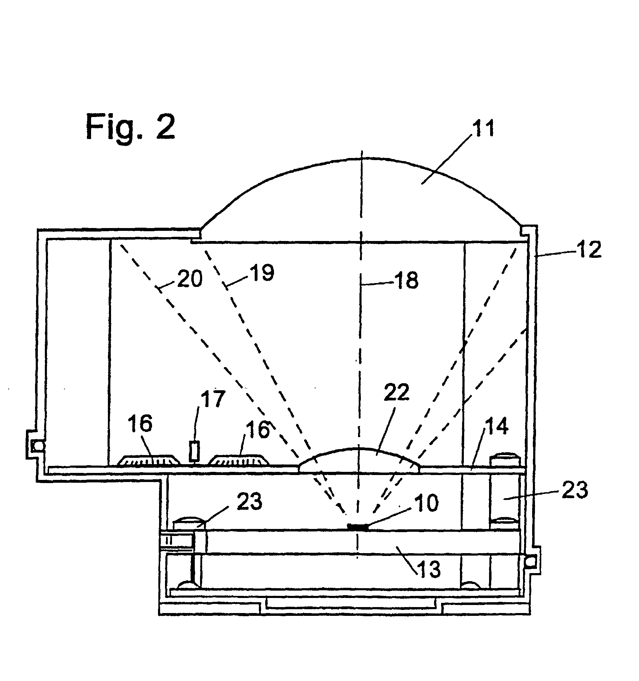

Figur 2 zeigt den Querschnitt eines Kraftfahrzeug-Radarsystems mit einer erfindungsgemäßen Mikrowellen-Antennenanordnung gemäß einer vorteilhaften Ausgestaltung der Erfindung, die sich insbesondere den gerade geschilderten Schwierigkeiten widmet. Der grundsätzliche Aufbau entspricht dabei dem in Figur 1a skizzierten Radarsystem, so daß gleiche Bezugszeichen auch gleiche Elemente bezeichnen. Die vorteilhafte Ausgestaltung der Erfindung besteht darin, daß die Aussparung 15 in dem Bauelementeträger 14 mit einer weiteren Antennenlinse (Sublinse) 22 ausgefüllt ist. Alternativ könnte die Sublinse 22 auch über oder unter der Aussparung 15 montiert sein oder es kann anstelle des linsenförmigen dielektrischen Körpers ein Superstrate Verwendung finden. Selbstverständlich sind verschiedene Linsenformen oder dielektrischen Materialien verwendbar. Durch die fokussierende Wirkung der Sublinse 22 werden eine Überstrahlung der Antennenlinse 11 sowie die damit verbundenen, beschriebenen Nachteile vermieden. Außerdem verkleinert sich durch die Verwendung eines Mehrfach-Linsensystems die Brennweite der gesamten Antennenanordnung, so daß auch aus diesem Grund die Baugröße des Radarsystems noch weiter verkleinert werden kann. Die Montage der Sublinse 22 ist dabei im Vergleich zu der Montage von Polyrods 21 wesentlich weniger empfindlich gegenüber Toleranzen. Selbstverständlich können jedoch, wenn es einem Fachmann sinnvoll erscheint, zusätzlich noch Polyrods 21 verwendet werden.

In Erweiterung oder Fortführung des bisher Beschriebenen können natürlich auch mehrere Bauelementeträger 14 in dem Bereich zwischen dem oder den Speiselementen 10 und dem fokussierenden Mittel 11 angeordnet werden.

Darüber hinaus fallen auch Ausführungsbeispiele unter die Erfindung, bei denen die "Ausparung" des Bauelementeträgers 14 "so groß" ist, daß der hier einstückig dargestellte Bauelementeträger 14 aus zwei getrennten Teilen besteht, die beide jeweils im Raumbereich zwischen dem fokussierenden Mittel und dem Speiseelement angeordnet sind und zwischen denen die elektromagnetischen Wellen hindurchtreten können.

## Patentansprüche

1. Mikrowellen-Antennenanordnung für ein Kraftfahrzeug-Radarsystem,
- mit mindestens einem fokussierenden Mittel (11), vorzugsweise einer dielektrischen Linse,
- und mindestens einem Speiseelement (10), welches elektromagnetische Wellen, die von dem fokussierenden Mittel fokussiert werden, aufnimmt und/oder abgibt,
- wobei in einem Raumbereich zwischen dem fokussierenden Mittel (11) und dem mindestens einen Speiseelement (10) ein Bauelementeträger (14) angeordnet ist,
- wobei der Bauelementeträger in etwa quer zur Hauptstrahlrichtung (18) der Antennenanordnung angeordnet ist,
- wobei auf dem Bauelementeträger (14) elektronische oder elektrische Bauelemente (16,17) angeordnet sind und
- wobei der Bauelementeträger (14) sowohl von dem mindestens einen Speiseelement (10) als auch von dem fokussierenden Mittel (11) beabstandet ist,
**dadurch gekennzeichnet,**
- **daß** der Bauelementeträger (14) eine Aussparung (15) zum Durchtritt der elektromagnetischen Wellen aufweist und
- **daß** die elektronischen oder elektrischen Bauelemente (16,17) auf dem Bauelementeträger (14) zur Verarbeitung von anderen Signalen vorgesehen sind, als den Signalen, die von dem mindestens einen Speiseelement (10) aufgenommen oder abgegeben werden.

2. Mikrowellen-Antennenanordnung nach Anspruch 1, **dadurch gekennzeichnet, daß** der Bauelementeträger (14) und die elektronischen oder elektrischen Bauelemente (16,17) zur Verarbeitung von Signalen vorgesehen sind, die in einem Frequenzbereich liegen, der niedriger ist als der Frequenzbereich der elektromagnetischen Wellen.

3. Mikrowellen-Antennenanordnung nach Anspruch 1 oder 2, **dadurch gekennzeichnet, daß** die elektronischen oder elektrischen Bauelemente (16,17) überwiegend zur Verarbeitung von digitalen Signalen vorgesehen sind.

4. Mikrowellen-Antennenanordnung nach Anspruch 1, **dadurch gekennzeichnet, daß** die elektronischen oder elektrischen Bauelemente (16,17) Bestandteil einer Strom- oder Spannungsversorgungsschaltung sind.

5. Mikrowellen-Antennenanordnung nach Anspruch 1, **dadurch gekennzeichnet, daß** zwischen dem Speiseelement und dem fokussierenden Mittel mindestens ein weiteres fokussierendes Mittel (22) angeordnet ist, welches an dem Bauelementeträger (14) befestigt ist

6. Mikrowellen-Antennenanordnung nach Anspruch 5, **dadurch gekennzeichnet, daß** das weitere fokussierende Mittel eine dielektrische Linse (22) ist, die in, über oder unter der Ausparung des Bauelementeträgers angeordnet ist.

7. Mikrowellen-Antennenanordnung nach Anspruch 5, **dadurch gekennzeichnet, daß** das weitere fokussierende Mittel ein dielektrischer Körper ist, dessen Abmessungen so gewählt sind, daß er für die elektromagnetischen Wellen als Superstrate wirkt.

8. Verwendung einer Mikrowellen-Antennenanordnung nach einem der vorhergehenden Ansprüche bei einem Kraftfahrzeug-Radarsystem.

## Claims

1. Microwave antenna arrangement for a motor vehicle radar system,
- having at least one focusing means (11), preferably a dielectric lens,
- and at least one supply element (10) which picks up and/or outputs electromagnetic waves which are focused by the focusing means,
- a component carrier (14) being arranged in a space between the focusing means (11) and the at least one supply element (10),
- the component carrier being arranged approximately transverse to the main beam direction (18) of the antenna arrangement,
- electronic or electric components (16, 17) being arranged on the component (14), and
- the component carrier (14) being spaced apart both from the at least one supply element (10) and from the focusing means (11),
**characterized**
- **in that** the component carrier (14) has a cut-out (15) for the passage of the electromagnetic waves, and
- **in that** the electronic or electric components (16, 17) on the component carrier (14) are provided for processing other signals than the signals which are picked up or output by the at least one supply element (10).

2. Microwave antenna arrangement according to Claim 1, **characterized in that** the component carrier (14) and the electronic or electric components (16, 17) are provided for the purpose of processing signals which lie in a frequency range which is lower than the frequency range of the electromagnetic waves.

3. Microwave antenna arrangement according to Claim 1 or 2, **characterized in that** the electronic or electric components (16, 17) are provided mainly for processing digital signals.

4. Microwave antenna arrangement according to Claim 1, **characterized in that** the electronic or electric components (16, 17) are a constituent of a current or voltage supply circuit.

5. Microwave antenna arrangement according to Claim 1, **characterized in that** arranged between the supply element and the focusing means is at least one further focusing means (22) which is fastened on the component carrier (14).

6. Microwave antenna arrangement according to Claim 5, **characterized in that** the further focusing means is a dielectric lens (22) which is arranged in, above or below the cut-out in the component carrier.

7. Microwave antenna arrangement according to Claim 5, **characterized in that** the further focusing means is a dielectric member whose dimensions are selected such that it acts as a superstrate for the electromagnetic waves.

8. Use of a microwave antenna arrangement according to one of the preceding claims in a motor vehicle radar system.

## Revendications

1. Montage d'antenne hyperfréquence pour un système de radar de véhicule automobile comprenant :
- au moins un moyen de focalisation (11) de préférence une lentille diélectrique,
- au moins un élément d'alimentation (10) qui reçoit et/ou émet des ondes électromagnétiques focalisées par le moyen de focalisation,
- un support de composant (14), monté dans la zone d'espace comprise entre le moyen de focalisation (11) et l'élément d'alimentation (10),
- le support d'éléments de construction est installé sensiblement transversale à la direction principale de rayonnement (18) du montage d'antenne,
- le support de composants (14) portant des composants électroniques ou électriques (16, 17) et
- le support de composants (14) étant écarté par rapport à l'élément d'alimentation (10) et par rapport au moyen de focalisation (11),
**caractérisé en ce que**
- le support de composants (14) comporte une découpe (15) pour le passage des ondes électromagnétiques, et
- les composants électroniques ou électriques (16, 17) sont prévus sur le support de composant (14) pour le traitement d'autres signaux que ceux émis ou reçus par l'élément d'alimentation (10).

2. Montage d'antenne hyperfréquence selon la revendication 1,
**caractérisé en ce que**
le support de composants (14) et les composants électroniques ou électriques (16, 17) sont prévus pour le traitement de signaux situés dans une plage de fréquence inférieure à la plage de fréquence des ondes électromagnétiques.

3. Montage d'antenne hyperfréquence selon l'une quelconque des revendications 1 ou 2,
**caractérisé en ce que**
les composants électroniques ou électriques (16, 17) sont prévus principalement pour le traitement de signaux numériques.

4. Montage d'antenne hyperfréquence selon la revendication 1,
**caractérisé en ce que**
les composants électroniques ou électriques (16, 17) font partie d'un circuit d'alimentation en courant ou en tension.

5. Montage d'antenne hyperfréquence selon la revendication 1,
**caractérisé par**
au moins un autre moyen de focalisation (22) entre l'élément d'alimentation et le moyen de focalisation, cet autre moyen étant fixé au support de composants (14).

6. Montage d'antenne hyperfréquence selon la revendication 5,
**caractérisé en ce que**
l'autre moyen de focalisation est une lentille diélectrique (22) installée dans, sur, ou sous la découpe du support de composants.

7. Montage d'antenne hyperfréquence selon la revendication 5,
**caractérisé en ce que**
l'autre moyen de focalisation est un corps diélectrique dont les dimensions sont choisies pour fonctionner comme super couche pour les ondes électromagnétiques.

8. Application d'un dispositif d'antenne hyperfréquence selon l'une quelconque des revendications précédentes, à un système de radar de véhicule automobile.
